# EUROPEAN PATENT APPLICATION

(11) **EP 1 818 868 A2**
(43) Date of publication of application: **15.08.2007**
(21) Application number: 07101845.1
(22) Date of filing: 06.02.2007
(51) Int. Cl.: G06Q 40/00

(54) **Reduction of I/O-operations in a server at a trading system**

(30) Priority: 09.02.2006 US 350493
(71) Applicant: Cinnober Financial Technology AB, 112 46 Stockholm (SE)
(72) Inventor: Ljungqvist, Mats, SE-141 35, Huddinge (SE); Sellberg, Lars-Ivar, SE-182 53, Danderyd (SE)
(74) Representative: Loqvist, Gabriel Mathias

(57) **Abstract**

A method, system, computer readable medium, and computer program product for a computer system (10) communicating with a plurality of clients (12A, 12B, 12C), the system (10) including first/primary and second/secondary servers (16a, 16b) for receiving incoming messages of the system (10), the first server (16a) comprising a storage means (18a) for storing incoming messages and a business logic unit (20a) for processing the incoming messages. Incoming messages received from a client (12A, 12B, 12C) are placed in a cache memory (17a); the message is processed in the business logic unit (20a); and a check is performed to see whether the message has been stored in the storage means (18a). If the message not has been stored, a storing operation is performed in order to store all messages of the cache memory (17a); and an acknowledgment is sent to at least the sending client including a verification that the message actually has been stored in the storage means (18a).

## Description

### TECHNICAL AREA

The present invention relates to electronic trading systems for trading stocks, bonds, futures, options and other financial instruments as well as betting and e-gaming, and in particular to methods, systems, computer readable mediums and computer program products for such systems.

### BACKGROUND OF THE INVENTION

During the last decade, almost all the world's exchanges and marketplaces have introduced electronic trading systems. These systems either replace the traditional trading floors or are used as complements to them. Today a large number of exchanges throughout the world utilizes electronic trading to trade stocks, bonds, futures, options and other financial instruments. These electronic exchanges are generally includes three basic components, namely server computers (host), communication servers, and the exchanges participants' computers (client). The host constitutes, so to speak, the heart of the electronic trading system. The hosts operations includes, for example, order-matching, maintaining order books and positions or price information. Participants, e.g., traders, are capable of communicating with the host by means of high speed data lines, high speed communications servers and the Internet. Thus, the traders can participate in the market by means of the clients communicating with the host.

In order to secure system availability, the exchange's system often uses two server placed in two geographically different spots interconnected via a network. One of the servers is considered being the primary server and the other consequently as the secondary. The system will be operational with only one server acting as primary, but will then, of course, not be redundant. The primary server will accept incoming messages, store them to disk in a log file and replicate the message to the secondary node or server. The two servers then perform the same business logic procedure based on the incoming message. This results in the two servers being synchronized and having the same application state, i.e., each transaction has the same state with respect to, for example, price or volume of a stock. If the primary server fails for some reason, the secondary server is accordingly able to take over and take the role as primary node and accept incoming messages. On the other hand, if the secondary server fails for some reason, the primary server just continuous to operate.

According to safety standards in such trading systems, each incoming transaction must also be stored on a disk unit in the primary server, apart from being sent to the secondary server for parallel processing. Therefore, when an incoming transaction is received, the transaction is stored on disk and before being sent to the business logic it is verified that the transaction actually has been stored. This is then confirmed to the client or the clients in the acknowledge message sent, e.g., by means of multicasting, to the client or the clients when the transaction has been processed by the business logic of the trading system. Accordingly, each transaction requires one I/O-operation, i.e., one operation is required to write each transaction to the storage medium (i.e., the disk unit). If the flow rate of incoming transactions is high, the number of I/O-operations per time unit will thus be high. Since the price of a storage device, to a large extent, is influenced by the number of I/O-operations the device must be capable of handling per time unit (i.e., the larger number of operations per time unit the higher price), the costs for a system that must be capable of handling a high transaction flow rates will be high.

Thus, there is need of an improved system and a method for a trading system.

### SUMMARY OF THE INVENTION

According to the present invention, an improved system and method for a trading system that are capable of handling incoming transactions in a more efficient way in terms of system load can be achieved.

Moreover, according to the present invention an improved system and method for a trading system that are more efficient in terms of costs can be achieved.

This may be achieved according to the present invention by providing a method, a computer system, a computer program, and a computer readable medium having the features defined in the independent claims. Embodiments of the present invention are defined in the dependent claims.

According to a first aspect of the present invention, there is provided a method for a computer system communicating with a plurality of clients, which system includes a first server for receiving incoming messages of the system during operation of the system, the first server comprising a storage means for storing incoming messages persistently and a business logic unit for processing the incoming messages. The method is characterized by the steps of: placing an incoming message in a cache memory; processing the message in the business logic unit; checking whether the message has been stored in the storage means; if the message not has been stored, performing a storing operation in order to store all messages of the cache memory in the storage means; and sending an acknowledgement to at least the sending client including a verification that the message actually has been stored in the storage means.

According to a second aspect of the present invention, there is provided a computer system communicating with a plurality of clients, which system including a first server for receiving incoming messages of the system during operation of the system, the first server comprising a storage means for storing incoming messages persistently and a business logic unit for processing the incoming messages. The system is characterized in that it comprises a receiving application adapted to place an incoming message in a cache memory; a business logic unit adapted to process the message; a control unit adapted to check whether the message has been stored in the storage means and, if the message not has been stored, send an instruction to the storage means to perform performing a storing operation in order to store all messages of the cache memory in the storage means and to notifying a publishing application that the message has been stored; and wherein the publishing application is adapted to, upon receiving a notification that the message has been stored, send an acknowledgement to at least the sending client including a verification that the message actually has been stored in the storage means.

According to third aspect of the present invention, there is provided a computer program for a system. The program comprises program instructions for performing the method according to the first aspect.

According to a fourth aspect of the present invention, there is provided a computer readable medium comprising instructions for bringing a computer to perform the method according to the first aspect.

Thus, the invention is based on the idea of storing incoming messages asynchronously and start processing of the messages before a confirmation has been received. When the message is about to be published, it is checked whether the message has been has been stored. If not, the content of the cache memory is written to disk (i.e., stored on a disk unit). In other words, messages are processed in parallel. This has several advantages in comparison with storing incoming messages synchronously, i.e., storing a messages and awaiting a confirmation, i.e., a reply that the message has been stored in due order, before the processing of the message is initiated. In order words, the number of I/O-operations can be reduced significantly by placing incoming messages in cache of the storing means or the server and wait with the verification that the message actually has been stored until the message has been processed and the acknowledgement can be sent to the client or the clients. The fact is that it is only necessary to actually have the verification that message has been stored the moment the acknowledgement is about to be sent to the client or the clients. Depending on the flow rate of incoming transactions, each time a storing operation is performed a number of messages will be stored in the storage medium. Therefore, a number of checks subsequent to a first check where it was identified that a first message was not stored and the storing operation accordingly was performed will show that a number of messages received after the first message already have been stored and, hence, no writing operation has to be performed for these subsequent messages. The number of messages that actually is stored persistently at each storing function depends on the flow rate of incoming messages. The higher the rate of inflow is, the more messages will be gathered in the cache memory before they are stored persistently in connection with a check showing that a first message in the cache have not been stored. That is, the number of writing operations can be significantly reduced, and, in fact, the higher the flow rate of incoming transactions is, the more beneficial the ratio between number of writing operations (I/O-operations) and total number of incoming transactions can be.

The present invention entails large cost reductions in a computer system that handles a large number of transactions per time unit. This is due to the fact that the price of a storage device, to a large extent, is influenced by the number of I/O-operations the device must be capable of handling per time unit (i.e., the larger number of operations per time unit the higher price). Hence, the costs for a system using the conventional technique and that handles high transaction flow rates will be high. Furthermore, the system load will also be lowered when using the present invention since the number of writing operations (I/O-operations) can be significantly reduced.

In an embodiment of the present invention, it is also checked whether the secondary server has verified or replied that the message has been received by the secondary server and, if the secondary server has replied, a verification that the secondary server has received the message is included in the acknowledge. Furthermore, the control unit is adapted to, if the secondary server has not replied, send an instruction to the publishing application to await the reply before sending the acknowledgement.

In an embodiment, the present invention is implemented in a system characterized by a high number of transactions per time unit, such as an electronic trading system for trading stocks, bonds, futures, options and other financial instruments as well as betting and e-gaming.

As realized by the person skilled in the art, the methods of the present invention, as well as preferred embodiments thereof, are suitable to realize as a computer program or a computer readable medium.

The features that characterize the invention, both as to organization and to method of operation, together with further objects and advantages thereof, will be better understood from the following description used in conjunction with the accompanying drawings. It is to be expressly understood that the drawings is for the purpose of illustration and description and is not intended as a definition of the limits of the invention. These and other objects attained, and advantages offered, by the present invention will become more fully apparent as the description that now follows is read in conjunction with the accompanying drawings.

### BRIEF DESCRIPTION OF DRAWINGS

In the following description of an embodiment of the invention, reference will be made to the accompanying drawings of which:

Fig. 1 is a general view of an electronic trading system in which the present invention can be implemented.

Fig. 2 is a general view of a second embodiment of an electronic trading system in which the present invention can be implemented.

Fig. 3 shows schematically the message flow in an electronic trading system in accordance with the present invention.

Fig. 4 shows schematically the general principles of the method according to the present invention.

Fig. 5 is a general view of a third embodiment of an electronic trading system in which the present invention can be implemented.

### DETAILED DESCRIPTION OF THE INVENTION

In the following there will be discussed preferred embodiments of the methods and system for efficient handling of incoming transaction in a computer system. It should be noted that, even if the embodiments discussed hereinafter are shown as being implemented within the contents of an electronic trading system, the present invention can be implemented in practically all transaction burdened computer systems, as the skilled man within the art also easily realizes.

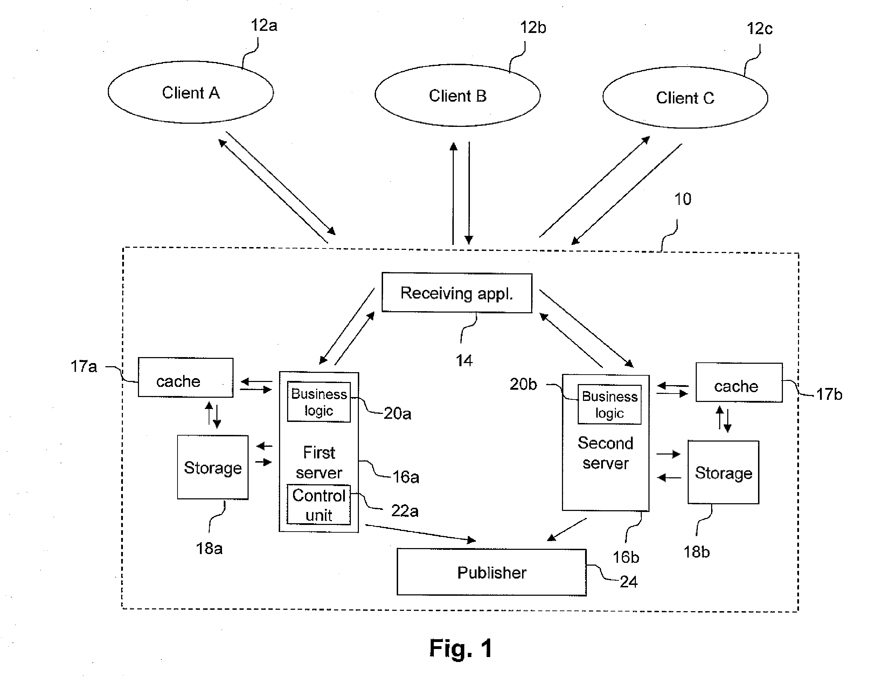

With reference first to Fig. 1, an electronic trading system in which the present invention can be implemented will be discussed. A number of clients, here indicated by client A 12a, client B 12b, and client C 12c, communicates with the trading or exchange system 10. Thus, traders can participate in the market by means of the clients 12a-12c communicating with the exchange system 10, i.e., the host. The clients 12a-12c may be linked to the system 10 via high speed data lines, high speed communication servers, or the Internet. High speed data lines establish direct connection between a client and the system. Connection can also be established between a client and the system by configuring high speed networks or communication servers at strategic access points in locations where traders physically are located. Internet is a third communication means enabling traders, using, for example, the clients 12a-12c, can communicate using, for example, high speed data lines connected to the Internet. Hence, trades are allowed to be located anywhere they can establish a connection to the Internet.

The system 10 comprises a receiving gateway 14 arranged to receive incoming messages from the clients 12a-12c and distribute them to a server 16a acting as the primary node. In order to secure system availability, the exchange's system often uses two server placed in two geographically different spots interconnected via a network. One of the servers is considered being the primary server and the other consequently as the secondary. The system will be operational with only one server acting as primary, but will then, of course, not be redundant. The primary server 16a accepts incoming messages transferred from the gateway 14, and stores them in a storage means 18a persistently, for example, a transaction log file in a non-volatile memory, such as a magnetically or optically readable disk. This storage means 18a may be of course be physically separated from the system 10 and the server 16a. Furthermore, the primary server 16a replicates the messages to the secondary node or server 16b, which, in turn, stores in a storage means 18b in a storage means 18a persistently, for example, in a transaction log file in a non-volatile memory, such as a magnetically or optically readable disk. This storage means 18b may be of course be physically separated from the system 10 and the server 16b. The two servers 16a, 16b perform the same business logic procedure based on the incoming message in the business logic unit 20a and 20 b, respectively. This results in the two servers being synchronized and having the same application state. If the primary server fails for some reason, the secondary server is accordingly able to take over and take the role as primary node and accept incoming messages. On the other hand, if the secondary server fails for some reason, the primary server just continuous to operate. Each message is then processed in both servers 16a and 16b and a transaction reply is sent from the primary server 16a when the processing of the message has been completed. When a the processing of a message has been completed, it is sent to a publisher gateway 24, which, for example, sends an acknowledge to the client who sent the particular message or to all clients by means of multicasting. The acknowledge contains, inter alia, a verification that the particular message has been stored in the storage means 18a.Thus, when the message is about to be published, it is checked whether the message has been has been stored. If not, the content of the cache memory is written to disk.

Specifically, the server is connected to a cache memory 17a for holding incoming messages or buffering incoming messages before they are actually stored in a persistent way in the storage means 18a. However, the cache memory 17a may be arranged in the storage means 18a or in the server 16a. The first server 16a also comprises a control unit 22a adapted check whether a specific incoming message has been stored in the storage means 18a and, if the message has not been stored, send an instruction to the storage means 18a to perform a storing operation in order to store all messages held by the cache memory 17a and to notify a publishing application 24 that the message has been stored. Preferably, this storing function is a flushing operation. The publishing application 24 is adapted to, upon receiving a notification that the particular message has been stored, send an acknowledgement to at least the sending client 12a, 12b, 12c including a verification that the message actually has been stored in the storage means 18a. This acknowledgement can, for example, be sent be means of multicasting to all clients 12a, 12b, 12c. If the control unit 22a finds that the message already has been stored in the storage means 18a, it is adapted to directly send the notification that that particular message has been stored to the publishing application 24 without performing the storing operation. Preferably, the control unit 22a is adapted to check whether the message has been stored in the storage means 18a and, if the message not has been stored, send an instruction to the storage means 18a to store all messages held by the cache memory 17a. Thus, when the message is about to be published, it is checked whether the message has been has been stored. If not, the content of the cache memory is written to disk.

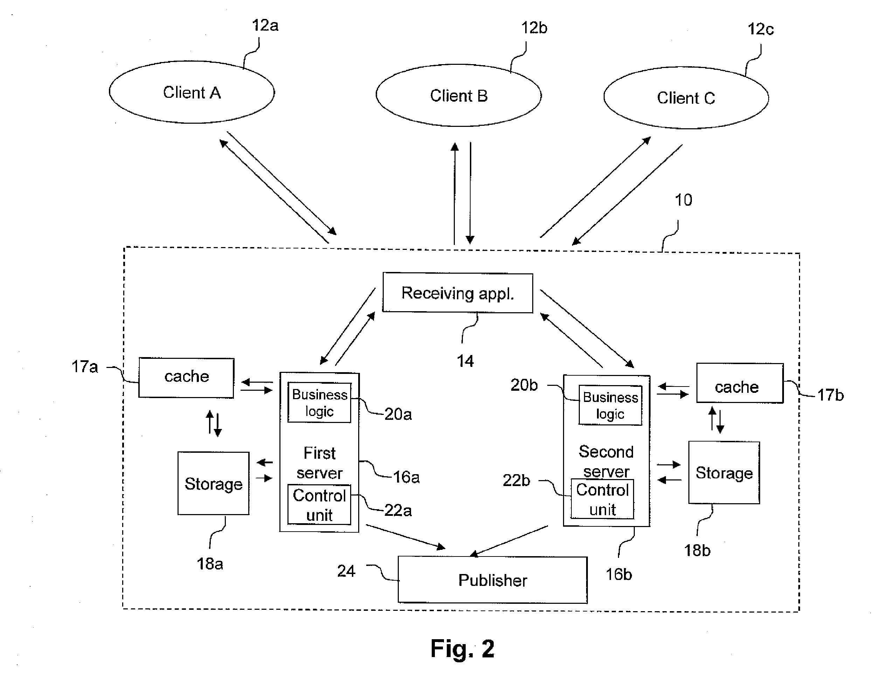

As the skilled man within the art easily realizes, the second server 16b may of course also include a control unit 22b capable of performing the same functions as the control unit 22a of the first server 16a, see Fig. 2. Thereby, the second server 16b may also function as a primary server using the present invention.

In an embodiment of the present invention, control unit 22a is adapted to check whether the secondary server has verified that the message has been received by the secondary server and, if the secondary server has replied, send an instruction to the publishing application 24 to include a verification that the secondary server has received the message in the acknowledge. Moreover, the control unit 22a is also adapted to, if the secondary server has not replied, send an instruction to the publishing application 24 to await the reply before sending the acknowledgement.

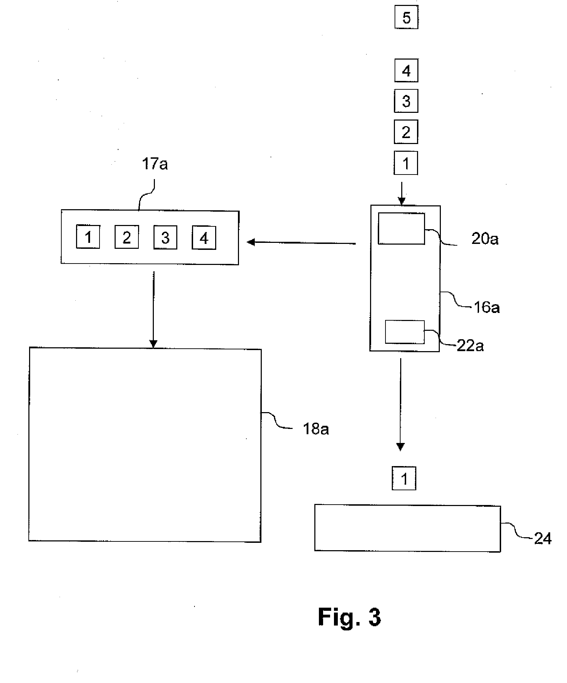

Turning now to Fig. 3, the idea of the invention will be described in more detail. As indicated above, the invention is mainly based on the idea of storing incoming messages asynchronously and start processing of the messages before an acknowledgement has been received. In order words, the number of I/O-operations can be reduced significantly by placing incoming messages in cache of the storage medium and wait with the verification that the message actually has been stored until the message has been processed and the acknowledgement can be sent to the client or the clients, i.e., processing messages in parallel.

As can be seen in Fig. 3, a stream of incoming messages 1, 2, 3, 4 is received from a client or from a number of clients. The messages are placed in cache 17a. At the publication of message 1, the control unit 22a checks whether the message 1 is stored in the storage means 18a. If not, the control unit 22a initiates a flushing operation in order to store all messages in the cache 17a in the storage means 18a in a persistent way, which in this case are messages 1, 2, 3, 4. Then, the acknowledgement including a verification that the message 1 has been stored is sent to the client or the clients. When the subsequent message 2 is about to be published, the control unit 22a checks whether message 2 has been stored. Since message 2 has been stored, no writing operation has to be executed in this case, and the acknowledge can be sent immediately. The same applies for message 3 and 4. Not until message 5, which was not placed in cache 17a when the flushing operation was executed, a new writing operation has to be performed. In this example, the number of writing operations was reduced with a factor four. The number of messages that actually are stored persistently at execution of a storing function depends on the flow rate of incoming messages. The higher the rate of inflow is, the more messages will be gathered in the cache memory before they are stored persistently in connection with a flushing function. That is, the number of writing operations can be significantly reduced, and, in fact, the higher the flow rate of incoming transactions is, the more beneficial the ratio between number of writing operations (I/O-operations) and total number of incoming transactions will be. Consequently, the present invention entails large cost reductions in a computer system that handles a large number of transactions per time unit. This is due to the fact that the price of a storage device, to a large extent, is influenced by the number of I/O-operations the device must be capable of handling per time unit (i.e., the larger number of operations per time unit the higher price).

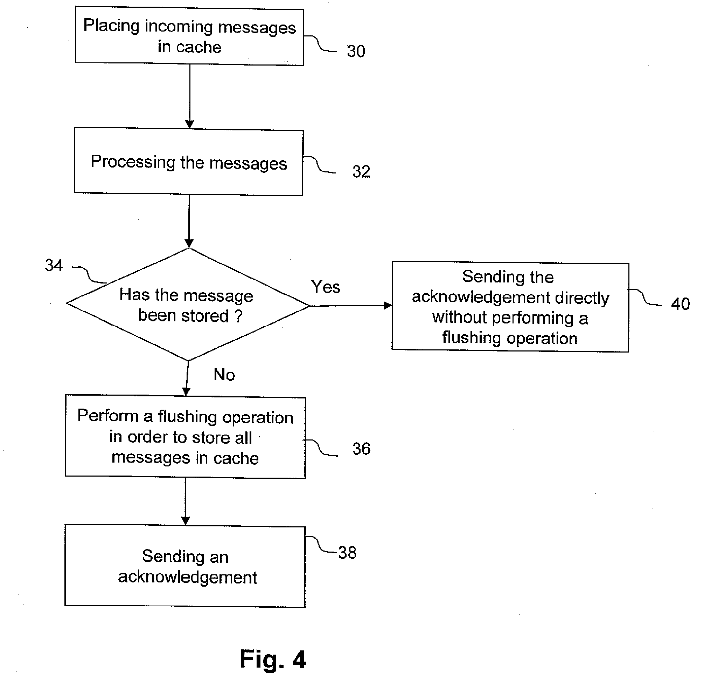

Turning now to Fig. 4, the general principles of the method according to the present invention will be described. The method will be described with reference to a computer system as described with reference to Fig. 1 including a first server 16a and a second server 16b, wherein the first server functions as a primary server for receiving incoming messages and the second server as a secondary server during operation of the system. Preferably, the method is implemented in a system characterized by a high number of transactions per time unit, such as an electronic trading system for trading stocks, bonds, futures, options and other financial instruments as well as betting and e-gaming.

First, at step 30, an incoming message received from a client is placed in the cache memory 17a. Thereafter, at step 32, without waiting for a verification that the message actually has been stored, the message is processed in the business logic unit 20a. After being processed, i.e., when the acknowledgement is to be published, it is checked, at step 34, whether the message has been stored in the storage means 18a. If the message has not been stored, the procedure proceeds to step 36, where a storing operation in order to store all messages of the cache memory 17a is performed. Then, at step 38, the acknowledgement including a verification that the message actually has been stored in the storage means 18a can be sent to at least the sending client.

On the other hand, if the message has been stored already in an earlier flush function, the procedure proceeds to step 40 where the acknowledgement is sent directly without performing a writing operation. Since all messages in the cache is stored on permanent basis in the storage means 18a each time the flush function is executed, not only the message to be published is stored but also a number of subsequent messages (i.e., having subsequent sequence numbers). No writing operations has to be executed for these subsequent messages, and the acknowledge can be sent immediately. The number of messages that actually is stored persistently at each storing function depends on the flow rate of incoming messages. The higher the rate of inflow is, the more messages will be gathered in the cache memory before they are stored persistently in connection with a check showing that a first message in the cache have not been stored. Hence, when the message is about to be published, it is checked whether the message has been has been stored. If not, the content of the cache memory is written to disk, i.e., to the disk unit.

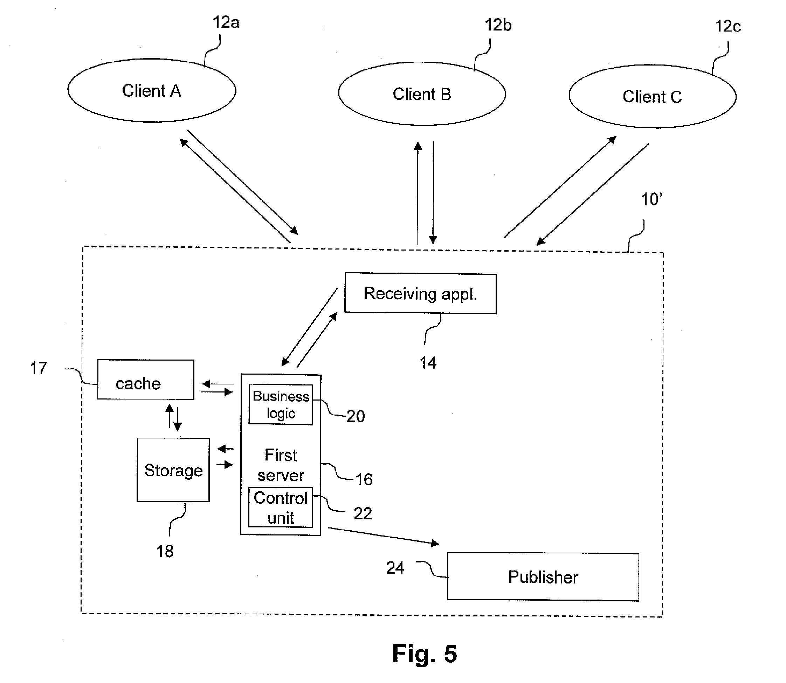

With reference now to Fig. 5, a third embodiment of an electronic trading system in which the present invention can be implemented will be discussed.

A number of clients, here indicated by client A 12a, client B 12b, and client C 12c, communicates with the trading or exchange system 10'. Thus, traders can participate in the market by means of the clients 12a-12c communicating with the exchange system 10', i.e., the host. The clients 12a-12c may be linked to the system 10' via high speed data lines, high speed communication servers, or the Internet. High speed data lines establish direct connection between a client and the system. Connection can also be established between a client and the system by configuring high speed networks or communication servers at strategic access points in locations where traders physically are located. Internet is a third communication means enabling traders, using, for example, the clients 12a-12c, can communicate using, for example, high speed data lines connected to the Internet. Hence, trades are allowed to be located anywhere they can establish a connection to the Internet.

The system 10' comprises a receiving gateway 14 arranged to receive incoming messages from the clients 12a-12c and distribute them to a server 16. The server 16 accepts incoming messages transferred from the gateway 14, and stores them in a storage means 18 persistently, for example, a transaction log file in a non-volatile memory, such as a magnetically or optically readable disk. This storage means 18 may be of course be physically separated from the system 10' and the server 16. The server 16 performs a business logic procedure based on the incoming message in the business logic unit 20. When the processing of a message has been completed, it is sent to a publisher gateway 24, which, for example, sends an acknowledge to the client who sent the particular message or to all clients by means of multicasting. The acknowledge contains, inter alia, a verification that the particular message has been stored in the storage means 18. Thus, when the message is about to be published, it is checked whether the message has been has been stored. If not, the content of the cache memory is written to disk.

Specifically, the server 16 is connected to a cache memory 17 for holding incoming messages or buffering incoming messages before they are actually stored in a persistent way in the storage means 18. However, the cache memory 17 may be arranged in the storage means 18 or in the server 16. The server 16 also comprises a control unit 22 adapted check whether a specific incoming message has been stored in the storage means 18 and, if the message has not been stored, send an instruction to the storage means 18 to perform a storing operation in order to store all messages held by the cache memory 17 and to notify a publishing application 24 that the message has been stored. Preferably, this storing function is a flushing operation. The publishing application 24 is adapted to, upon receiving a notification that the particular message has been stored, send an acknowledgement to at least the sending client 12a, 12b, 12c including a verification that the message actually has been stored in the storage means 18. This acknowledgement can, for example, be sent be means of multicasting to all clients 12a, 12b, 12c.If the control unit 22 finds that the message already has been stored in the storage means 18, it is adapted to directly send the notification that that particular message has been stored to the publishing application 24 without performing the storing operation. Preferably, the control unit 22 is adapted to check whether the message has been stored in the storage means 18 and, if the message not has been stored, send an instruction to the storage means 18 to store all messages held by the cache memory 17. Thus, when the message is about to be published, it is checked whether the message has been has been stored. If not, the content of the cache memory is written to disk.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the invention. Those of ordinary skill in the art will readily appreciate that the present invention could be implemented in a wide variety of embodiments, including hardware and software implementations, or combinations thereof. This application is intended to cover any adaptations or variations of the preferred embodiments discussed herein. Consequently, the present invention is defined by the wording of the appended claims and equivalents thereof.

## Claims

1. A method for computer system (10) communicating with a plurality of clients (12A, 12B, 12C), said system (10) including a first server (16A) for receiving incoming messages of said system (10) during operation of said system (10), said first server (16A) being connected to a storage means (18A) for storing incoming messages and said first server (16a) comprising a business logic unit (20a) for processing said incoming messages, said method comprising the steps of:
placing (30) an incoming message in a cache memory (17A);
processing (32) said message in said business logic unit (20A);
checking (34) whether said message has been stored in said storage means (18A);
if said message not has been stored, performing (36) a storing operation in order to store all messages of said cache memory (17A); and
sending (38) an acknowledgement to at least a sending client including a verification that said message actually has been stored in the storage means (18a).

2. The method according to claim 1, further comprising the step of:
if said message has been stored, sending said acknowledge directly without performing said storing operation.

3. The method according to claim 1 or 2, wherein the step of performing a storing operation comprises the step of:
registering the messages in said cache (17a) that were stored in said storing operation.

4. The method according to claim 1,2 or 3, wherein the step of sending comprises the step of sending said acknowledgement to said plurality of clients (12A, 12B, 12C) by means of multicasting.

5. The method according to claims 1-4, said system further comprising a second server (16b), wherein said first server (16a) functions as a primary server for receiving incoming messages of said system and said second server (16b) as a secondary server during operation of said system (10), wherein the step of checking whether said message has been stored in said storage means (18a) comprises the steps of:
sending said message to said secondary server (16b);
checking whether said secondary server (16b) has verified that said message has been received by said secondary server (16b); and
if said secondary server (16b) has replied, including a verification that said secondary server (16b) has received said message in said acknowledge.

6. The method according to claim 5, further comprising the step of:
if said secondary server (16b) has not replied, awaiting said reply before sending said acknowledgement.

7. The method according to claims 1-6, wherein said storing function is a flushing function.

8. A computer system (10) communicating with a plurality of clients (12A, 12B, 12C), said system (10) including a first server (16a) for receiving incoming messages of said system (10) during operation of said system (10), said first server (16a) comprising a storage means (18a) for storing incoming messages and a business logic unit (20a) for processing said incoming messages, said system (10) comprising:
storage means (18a) comprising a cache memory (17a) for holding incoming messages;
a business logic unit (20a) adapted to process said message;
a control unit (22a) adapted to check whether said message has been stored in said storage means (18a) and, if said message not has been stored, send an instruction to said storage means (18a) to perform a storing operation in order to store all messages held by said cache memory (17a) and to notify a publishing application (24) that said message has been stored; and wherein said publishing application (24) is adapted to, upon receiving a notification that said message has been stored, send an acknowledgement to at least a sending client including a verification that said message actually has been stored in the storage means (18a).

9. The computer system according to claim 8, wherein said control unit (22a) is adapted to, if said message has been stored, directly send said notification that said message has been stored to said publishing application (24) without performing said storing operation.

10. The computer system according to claim 8 or 9, wherein said publishing application (24) is adapted to send said acknowledgement to said plurality of clients (12A, 12B, 12C) by means of multicasting.

11. The computer system according to claims 8-10, said system (10) further comprising a second server (16b), wherein said first server (16a) functions as a primary server for receiving incoming messages of said system (10) and said second server (16b) as a secondary server during operation of said system (10), wherein said control unit (22a) is adapted to check whether said secondary server (16b) has verified that said message has been received by said secondary server (16b) and, if said secondary server (18b) has replied, send an instruction to said publishing application (24) to include a verification that said secondary server (16b) has received said message in said acknowledge.

12. The computer system according to claim 11, wherein said control unit (22a) is adapted to, if said secondary server (16b) has not replied, send an instruction to said publishing application (24) to await said reply before sending said acknowledgement.

13. The computer system according to claims 8-12, wherein said control unit (22a) is adapted to check whether said message has been stored in said storage means (18a) and, if said message not has been stored, send an instruction to said storage means (18a) to perform a storing operation in order to store all messages held by said cache memory (17a).

14. A computer program product executable on a business logic unit of a server (16a) in a computer system (10) communicating with a plurality of clients (12A, 12B, 12C), the server (16a) receiving and the business logic unit (20a) processing incoming messages of the computer system (10) during system operation, the server (16a) further being connected to an incoming message storage (18a), the computer program product causing the business logic unit (20a) to perform the steps of:
placing an incoming message in a cache memory (17a);
processing said message in said business logic unit (20a);
checking whether said message has been stored in said incoming message storage (18a);
if said message not has been stored, performing a storing operation in order to store all messages of said cache memory (17a); and
sending an acknowledgement to at least a sending client including a verification that said message actually has been stored in the incoming message storage (18a).

15. The computer program product of claim 14 wherein said computer program product further causes the business logic (20a) unit to perform the step of:
in response to said checking indicating that said message being previously been stored, sending said acknowledge directly without performing said storing operation.

16. A computer-readable medium that stores computer-executable process steps for receiving, processing, and storing messages coming to a computer system (10) from a plurality of clients (12A, 12B, 12C) during system operation, the computer system (10) including a server (16a) comprising a business logic unit (20a) and connected to an incoming message storage (18a), said computer-executable process steps causing a computer to perform the steps of:
placing an incoming message in a cache memory (17a);
processing said message in said business logic unit (20a);
checking whether said message has been stored in said incoming message storage (18a);
if said message not has been stored, performing a storing operation in order to store all messages of said cache memory (17a); and
sending an acknowledgement to at least a sending client including a verification that said message actually has been stored in the incoming message storage (18a).

17. The computer-readable medium of claim 16 wherein said computer-executable process steps further cause the computer to perform the step of:
in response to said checking indicating that said message being previously been stored, sending said acknowledge directly without performing said storing operation.
